# EUROPEAN PATENT SPECIFICATION

(11) **EP 3 853 081 B1**
(45) Date of publication and mention of the grant of the patent: **04.12.2024**
(21) Application number: 19795647.7
(22) Date of filing: 02.10.2019
(51) Int. Cl.: B60R 25/04, B62M 6/45

(54) **ANTITHEFT SYSTEM FOR A TWO-WHEELED ELECTRIC VEHICLE**
DIEBSTAHLSICHERUNGSSYSTEM FÜR EIN MOTORISIERTES ZWEIRADFAHRZEUG
SYSTÈME ANTIVOL POUR UN VÉHICULE À DEUX ROUES MOTORISÉ

(30) Priority: 03.10.2018 IT 201800009118
(43) Date of publication of application: 28.07.2021
(73) Proprietor: Texa S.p.A., 31050 Monastier di Treviso (TV) (IT)
(72) Inventor: VIANELLO, Bruno, 31050 Monastier di Treviso (TV) (IT)
(74) Representative: Citron, Massimiliano
(86) International application number: PCT/IB2019/058375
(87) International publication number: WO 2020/070660

(56) References cited:
- EP-A2- 2 801 495
- EP-B1- 1 425 211
- DE-U1- 202011 109 723
- US-A- 6 057 657
- US-A1- 2011 048 831
- US-A1- 2012 146 429
- US-A1- 2013 231 810

## Description

The present invention refers generically to an anti-theft system for a motorized two-wheeled vehicle, such as a Segway or, more preferably, an electric bicycle.

Today's power-assisted electric bicycles are sophisticated and managed by electronic control units. They also commonly have display devices to inform the rider with data about the route, the path, the status of the bicycle or with biometric data.

The display devices are almost always mounted on the handlebar, and in removable manner so as to be removed when the bike is parked and unattended.

Unfortunately, electric power-assisted bicycles are expensive, and theft attempts incessant, even for their accessories. To discourage theft, the display devices are also electronic keys, in the sense that the electric motor of the bicycle does not start if its display device is not connected.

However, there is always the risk that the criminal has with him/her another similar display device, inserts it into the bike and steals it anyway. Or he/she can assault the bicycle with the owner on the saddle, to steal together bicycle and the proprietary electronic key.

EP 1 425 211 discloses a recognition system based on a RFID tag.

The main object of the invention is to improve this state of the art.

Another object of the invention is to provide an accessory device of the aforesaid type, in particular a display device, which renders more secure the vehicle against theft.

These and other objects are achieved by what is defined in the annexed independent claims; other advantageous technical features are defined in the dependent claims.

An anti-theft security method is proposed for a motorized two-wheeled vehicle, e.g. an electric bicycle, wherein the vehicle comprises:
- an electric motor to assist or carry out the propulsion of the vehicle;
- an accessory detachable from the vehicle comprising an electronic circuit to wirelessly receive data, and
- an electronic processor configured to control the motor when the accessory is mounted on the vehicle;
wherein
the accessory emits a signal to unconditionally unlock the operation of the electronic processor or the motor only if, through the electronic circuit, it recognizes a wireless signal from an external portable electronic device.

Another aspect of the invention is an anti-theft security system comprising
a motorized two-wheeled vehicle, e.g. an electric bicycle, that comprises an electric motor to assist or carry out the propulsion of the vehicle,
an accessory comprising an electronic circuit for receiving data in wireless manner,
a microprocessor configured to control the motor, and
an external portable electronic device;
wherein the accessory is configured to emit a signal to unlock unconditionally the operation of the motor or of the microprocessor only if through the electronic circuit it recognizes a wireless signal coming from the external portable electronic device.

Another aspect of the invention is an accessory for a motorized two-wheeled vehicle, e.g. an electric bicycle,
the vehicle comprising an electric motor to assist or carry out the vehicle propulsion,
the accessory comprising an electronic circuit for receiving data in wireless manner,
wherein the accessory is configured to emit a signal to unlock unconditionally the operation of the motor only if through the electronic circuit it recognizes a wireless signal coming from the external portable electronic device.

Another aspect of the invention is a software program for said accessory, the software program containing instructions that, when loaded and executed in an accessory's microprocessor, execute one or each activity described here for the accessory, e.g. the respective steps of the method.

Another aspect of the invention is a software program (e.g. an *app*) for said external portable electronic device, the software program containing instructions that, when loaded and executed in a microprocessor of the external portable electronic device, perform one or each activity described herein for the external portable electronic device, e.g. the respective steps of the method.

The external portable electronic device is a mobile phone, a smartphone or a tablet. In the case of the smartphone or tablet, an *app* for managing the wireless communication with the accessory is loaded thereon, in particular to send said signal and/or carry out the authentication procedure of the external portable electronic device.

By *unconditionally unlock the operation of the electronic processor or of the motor* it is meant that the accessory is able to emit a signal without which the means controlling the electric motor, whichever they are, are not allowed to activate the motor.

For each aforementioned aspect of the invention, the following variants apply wherein the accessory is configured for
- sending said signal only when it is mounted on the vehicle; when it is disconnected therefrom it enters a low-power mode or turns off; and/or
- unconditionally unlocking the operation of the motor by sending a signal to a microprocessor configured to control the motor, the microprocessor being on board the accessory or the vehicle, and/or
- unlocking the motor operation only if through the electronic circuit it recognizes a specific signal coming from an external portable electronic device. The specificity of the signal allows e.g. that more than one portable electronic device can enable the motor operation with said wireless signal, as long as the wireless signal is validly encoded or contains a valid code. The valid code can be e.g. inserted or generated in the portable electronic device via an App loaded into the portable electronic device; and/or
- unblocking the motor operation only if through the electronic circuit it recognizes a signal coming from a specific external portable electronic device. In this case only one or a small minority of portable electronic devices are able to enable the motor operation, e.g. because as a code they send their own serial code or have been previously enabled by the accessory via an authentication procedure; and/or
- asking the user to enter a code to unlock the operation of the motor if the accessory does not recognize said signal, and if the entered code is correct, the accessory is configured to unlock the motor.

For each aspect of the invention, the following additional variants apply:
- the accessory device comprises a display for displaying data or information. In particular, the display consists of a *touch-screen,* to avoid pushbuttons on the device and to provide a control surface to enter commands or the unlock code. When the accessory is mounted on the vehicle, the display can e.g. be driven by an electronic circuit to display the speed of the vehicle and/or to display the remaining charge of its battery and/or of an external battery, which supplies an electric motor which propels the vehicle on the ground; and/or
- the accessory device comprises a portion shaped for the removable attachment to the vehicle, or the accessory is mounted in permanent manner on the vehicle, and/or
- the electronic circuit for receiving data wirelessly is a receiver, preferably a transceiver, built with Bluetooth or wi-fi or GSM technology; Bluetooth technology is particularly advantageous because through the *pairing* it simplifies the association and/or the univocal authentication between the portable device and the accessory; and/or
- the accessory device comprises an attachment portion (e.g. to the handlebar) of the vehicle; and/or
- the accessory device comprises non-permanent fixing means, such as Veltro^{®}, magnets or mutual-interlocking portions, to a reception element mounted on the vehicle; preferably the accessory and the reception element mounted on the vehicle can be attached to each other along respective complementary surfaces, on which e.g. there may be the non-permanent mutual fixing means.

Preferably said portion for attachment to the handlebar comprises a ring or a clamp that can be tightened around or on the handlebar, to facilitate installation on a bicycle; and/or
- the accessory comprises non-permanent fixing means, such as Veltro^{®}, magnets or mutual-interlocking portions, to a reception element mounted on the vehicle; the accessory and the reception element can be connected to each other via electrical connectors for electrically connecting the accessory and the reception element; and/or
- the accessory on board comprises an independent battery with which it is electrically powered. In this variant, preferably the accessory comprises a power socket by which the battery can be recharged or by which the accessory can be recharged by a battery; and/or
- the accessory to power-supply itself and/or recharge its own battery, comprises on board a photovoltaic panel or a high capacity capacitor.

It is understood that the actions carried out by the accessory or the portable electronic device are preferably the effect of instructions of a respective software program loaded in them. The software program instructions are preferably carried out by a microprocessor.

However, it is also possible to use electronic circuits with non-programmable logic or discrete component circuits.

Advantageously, in the portable electronic device the software program instructions are preferably structured and/or comprised in an *app.*

Further advantages will be clear from the following description, which refers to a preferred embodiment of a system in which:
- figure 1 shows a three-dimensional view of the accessory mounted on a bicycle handlebar;
- figure 2 shows a block diagram of a system formed by the accessory and the bicycle.

The accessory 10 can be attached to the handlebar 8 of a bicycle 6 via a reception element 90.

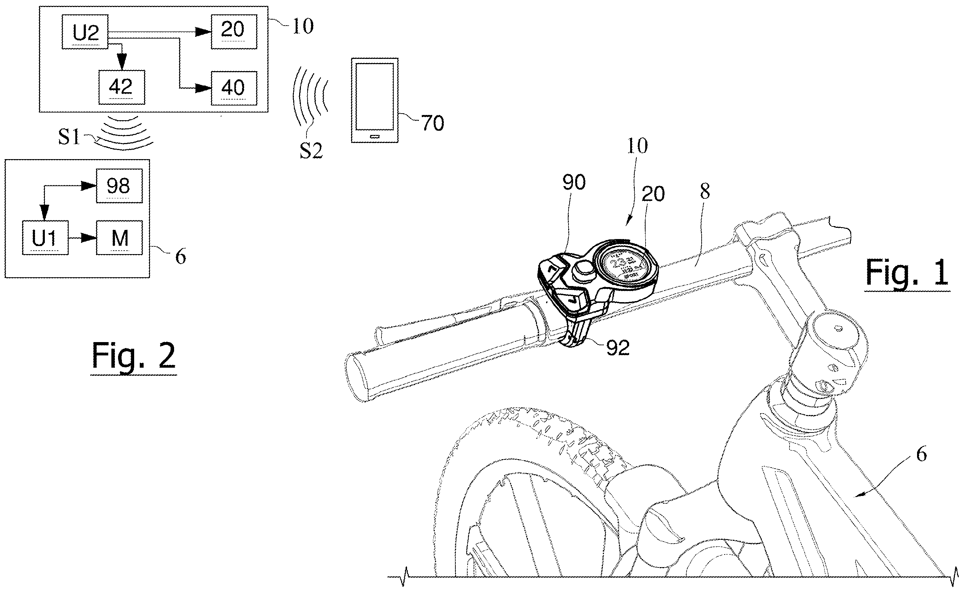

The bicycle 6 (see diagram in Fig. 2) is equipped with an electric motor M, to assist pedaling, and a signal receiver 98, both managed by an electronic circuit U1 (e.g. microprocessor-based).

The reception element 90 is formed e.g. by a ring or clamp 92 that can be tightened around the handlebar 8. The reception element 90 can be also conformed in other ways, e.g. with adhesives, magnets or single screws. A part of the ring or clamp 92 forms an almost flat surface, complementary to the lower surface of the accessory 10. The lower surface and the almost flat surface can be overlapped and serve as positional reference for the joining between the reception element 90 and the accessory 10. These two pieces are joined when the accessory 10 works on and for the bicycle 6, or they may remain separated when the accessory 10 is working independently, away from the bicycle 6.

At the center of the accessory 10 there is a display 20 to display data. The display 20 is driven by an electronic circuit U2, e.g. with a microprocessor, and preferably is a touch screen.

The accessory 10 also comprises
- a receiver 40 of radio signal S2 emitted by a remote device 70; and
- a signal transmitter 42 capable of sending a signal S1 to the receiver 98.

To facilitate the detachment between the accessory 10 and the bicycle 6, the transmitter 42 and the transmitter 98 are wireless transceivers through propagation of electromagnetic waves, e.g. Bluetooth^{®}, and the signal S1 is wireless, but not necessarily. The signal S1 can also travel on a waveguide, like a cable, and the transmitter 42 and the transmitter 98 are in this case electronic circuits to manage analog or digital electrical signals. To such aim, there will be electrical connectors between the accessory 10 and the element 90 to connect the terminals.

The electronic circuit U2 is connected to the display 20, to the receiver 40 and to the transmitter 42, to control them.

The anti-theft defense system for the bicycle 6 works as follows.

When the accessory 10 is attached to the element 90, it works in known way to display data relating to the bicycle 6 and/or the route (e.g. speed and/or travel time).

Moreover, the electronic circuit U2 is able to detect, via the receiver 40, a signal S2 coming from the remote device 70, such as e.g. a smartphone, in particular from a Bluetooth^{®} transmitter on the smartphone 70.

There are then two operation modes.

### Mode 1

If, and only if, the electronic circuit U2 detects the signal S2, it gives the consent for normal operation of the motor M, which otherwise remains blocked or disabled.

The consent or blocking can take place in different ways, depending on the circuit that effectively controls the motor M.

If it is the electronic circuit U2 that controls the operation of the motor M, the block consists in the absence of a signal S1 that starts and/or regulates the motor M. The signal S1 is sent via the transmitter 42 directly to the motor M o is a driving signal sent to circuit U1.

If it is the electronic circuit U1 that controls the operation of the motor M, the block or consent consists of a signal S1 which is sent by the circuit U2 to the circuit U1 to, respectively, inhibit or activate the start and/or the regulation of the motor M by the circuit U1.

### Mode 2

The electronic circuit U2 does not detect the signal S2, and the operation of the motor M remains blocked or disabled. This can happen e.g. in case of loss of the smartphone 70 or if its battery is dead.

In this mode, the electronic circuit U2 is configured to request to the user a security code to unlock the motor M.

The security code can be entered e.g. via the touch-screen 20, or through a keypad (not shown) connected to the circuit U2.

If the electronic circuit U2 verifies that the entered security code has coincides with an internally stored code, it unlocks the motor M.

The use of a smartphone 70 to provide the unlocking signal S2 is very convenient and advantageous, given the widespread use of this device. In practice everyone has at least one.

Each smartphone 70 is equipped with a Bluetooth^{®} transceiver, so the communication with the accessory 10 can exploit existing hardware. The Bluetooth^{®} channel simplifies with the *pairing* also the unique recognition between the smartphone 70 and the accessory 10.

In the smartphone 70 there is preferably installed an *app* that manages the generation of the signal S2 and the initial *pairing* with the accessory 10.

The *app* can also allow enabling multiple smartphones 70 to send the unblocking signal S2 to the accessory 10.

Instead of the smartphone 70, a tablet, a smart-watch, or any remote transmitter can be used.

It should be noted that a variant is also possible in which the device 10 can only transmit the signal S1 and the means in the bicycle 6 can only receive it.

Preferably when the accessory 10 is detached from the reception element 90 it turns off or goes into low-power mode, to increase the life of its batteries.

## Claims

1. Anti-theft security method for a two-wheel motorized vehicle (6) wherein the vehicle comprises:
- an electric motor (M) to assist or carry out the propulsion of the vehicle;
- an accessory (10) detachable from the vehicle comprising an electronic circuit (40) for receiving a signal in wireless manner, and
- an electronic processor (U1, U2) configured to control the motor when the accessory (10) is mounted on the vehicle (6);
wherein
the accessory (10) emits a signal (S1) to unconditionally unlock the operation of the electronic processor (U2) or of the motor (M) only if, through the electronic circuit (40), it recognizes a wireless signal coming from an external portable electronic device (70),
the external portable electronic device (70) being a mobile phone, a smartphone or a tablet.

2. Anti-theft security system comprising
- a two-wheeled motorized vehicle (6) which comprises
an electric motor (M) to assist or carry out the propulsion of the vehicle,
an accessory (10) detachable from the vehicle comprising an electronic circuit (40) for receiving data in wireless manner,
a microprocessor (U2) configured to control the motor (M);
- an external portable electronic device (70), which is a mobile phone, a smartphone or a tablet,
wherein the accessory (10) is configured to emit a signal (S1) to unconditionally unlock the operation of the motor (M) or of the microprocessor (U2) only if, through the electronic circuit (40), it recognizes a wireless signal (82) coming from the external portable electronic device (70).

3. Accessory (10) for a two-wheel motorized vehicle (6),
the vehicle comprising an electric motor (M) to assist or carry out the propulsion of the vehicle,
the accessory comprising
- a portion shaped for removable attachment to the vehicle, and
- an electronic circuit (40) for receiving a signal (S2) in wireless manner,
wherein the accessory (10) is configured to emit a signal (S1) to unconditionally unlock the motor's operation only if, through the electronic circuit (40), it recognizes a wireless signal (S2) coming from the external portable electronic device (70), the latter being a mobile phone, a smartphone or a tablet.

4. Method or system or accessory (10) according to any one of the previous claims, wherein the accessory (10) is configured to send said signal (S1) only when it is mounted on the vehicle (6).

5. Method or system or accessory (10) according to any one of the previous claims, wherein the accessory (10) is configured to unconditionally unlock the operation of the motor (M) by sending a signal to a microprocessor (U1) configured to control the motor (M), the microprocessor being on board the accessory or the vehicle.

6. Method or system or accessory (10) according to any one of the previous claims, wherein the accessory (10) is configured to unconditionally unlock the operation of the motor (M) only if, through the electronic circuit (40), it recognizes a specific signal (S2) from an external portable electronic device (70).

7. Method or system or accessory (10) according to any one of the previous claims, wherein the accessory (10) is configured to unconditionally unlock the operation of the motor (M) only if through the electronic circuit (40) it recognizes a signal (S2) from a specific external portable electronic device (70).

8. Method or system or accessory (10) according to any one of the previous claims, wherein the accessory (10) is configured to request the user to enter a code to unlock the motor's operation if the accessory does not recognize said signal (S2), and if the entered code is correct, the accessory is configured to unlock the motor (M).

9. Method or system or accessory (10) according to any one of the previous claims, wherein the accessory (10) comprises a display (20) for displaying data or information.

10. Method or system or accessory (10) according to any one of the previous claims, wherein two-wheeled motorized vehicle (6) is an electric bicycle.

## Patentansprüche

1. Diebstahlsicherungsverfahren für ein zweirädriges Kraftfahrzeug (6), wobei das Fahrzeug umfasst:
- einen Elektromotor (M) zur Unterstützung bzw. Durchführung des Fahrzeugantriebs;
- ein vom Fahrzeug abnehmbares Zubehör (10), das eine elektronische Schaltung (40) zum drahtlosen Empfangen eines Signals umfasst, und
- einen elektronischen Prozessor (U1, U2), der dazu konfiguriert ist, den Motor zu steuern, wenn das Zubehör (10) am Fahrzeug (6) montiert ist;
worin
- das Zubehör (10) sendet ein Signal (S1) aus, um den Betrieb des elektronischen Prozessors (U2) oder des Motors (M) nur dann bedingungslos freizugeben, wenn es über die elektronische Schaltung (40) ein drahtloses Signal erkennt, das von einem externen tragbaren elektronischen Gerät (70) kommt,
wobei das externe tragbare elektronische Gerät (70) ein Mobiltelefon, ein Smartphone oder ein Tablet ist.

2. Diebstahlsicherungssystem bestehend aus
- ein zweirädriges Kraftfahrzeug (6), das umfasst
einen Elektromotor (M) zur Unterstützung bzw. Durchführung des Vortriebs des Fahrzeugs,
ein vom Fahrzeug abnehmbares Zubehör (10), das eine elektronische Schaltung (40) zum drahtlosen Empfangen von Daten umfasst,
einen Mikroprozessor (U2), der zum Steuern des Motors (M) konfiguriert ist;
- ein externes tragbares elektronisches Gerät (70), beispielsweise ein Mobiltelefon, ein Smartphone oder ein Tablet,
wobei das Zubehör (10) so konfiguriert ist, dass es nur dann ein Signal (S1) aussendet, um den Betrieb des Motors (M) oder des Mikroprozessors (U2) bedingungslos freizugeben, wenn es über die elektronische Schaltung (40) ein drahtloses Signal (82) erkennt, das von dem externen tragbaren elektronischen Gerät (70) kommt.

3. Zubehör (10) für ein zweirädriges Kraftfahrzeug (6),
wobei das Fahrzeug einen Elektromotor (M) zur Unterstützung oder Durchführung des Antriebs des Fahrzeugs umfasst,
wobei das Zubehör umfasst
- ein Teil, das für eine abnehmbare Befestigung am Fahrzeug geformt ist, und
- eine elektronische Schaltung (40) zum drahtlosen Empfangen eines Signals (S2),
wobei das Zubehör (10) so konfiguriert ist, dass es nur dann ein Signal (S1) zur bedingungslosen Freigabe des Motorbetriebs aussendet, wenn es über die elektronische Schaltung (40) ein drahtloses Signal (S2) erkennt, das von dem externen tragbaren elektronischen Gerät (70) kommt, wobei es sich bei Letzterem um ein Mobiltelefon, ein Smartphone oder ein Tablet handelt.

4. Verfahren oder System oder Zubehör (10) gemäß einem der vorhergehenden Ansprüche, wobei das Zubehör (10) dazu konfiguriert ist, das Signal (S1) nur zu senden, wenn es am Fahrzeug (6) montiert ist.

5. Verfahren oder System oder Zubehör (10) gemäß einem der vorhergehenden Ansprüche, wobei das Zubehör (10) dazu konfiguriert ist, den Betrieb des Motors (M) bedingungslos freizugeben, indem ein Signal an einen Mikroprozessor (U1) gesendet wird, der dazu konfiguriert ist, den Motor (M) zu steuern, wobei sich der Mikroprozessor an Bord des Zubehörs oder des Fahrzeugs befindet.

6. Verfahren oder System oder Zubehör (10) gemäß einem der vorhergehenden Ansprüche, wobei das Zubehör (10) so konfiguriert ist, dass es den Betrieb des Motors (M) nur dann bedingungslos freigibt, wenn es über die elektronische Schaltung (40) ein bestimmtes Signal (S2) von einem externen tragbaren elektronischen Gerät (70) erkennt.

7. Verfahren oder System oder Zubehör (10) gemäß einem der vorhergehenden Ansprüche, wobei das Zubehör (10) so konfiguriert ist, dass es den Betrieb des Motors (M) nur dann bedingungslos freigibt, wenn es über die elektronische Schaltung (40) ein Signal (S2) von einem bestimmten externen tragbaren elektronischen Gerät (70) erkennt.

8. Verfahren oder System oder Zubehör (10) gemäß einem der vorhergehenden Ansprüche, wobei das Zubehör (10) so konfiguriert ist, dass es den Benutzer auffordert, einen Code einzugeben, um den Betrieb des Motors freizugeben, wenn das Zubehör das Signal (S2) nicht erkennt, und dass das Zubehör so konfiguriert ist, dass es den Motor (M) freigibt, wenn der eingegebene Code korrekt ist.

9. Verfahren oder System oder Zubehör (10) nach einem der vorhergehenden Ansprüche, wobei das Zubehör (10) ein Display (20) zum Anzeigen von Daten oder Informationen umfasst.

10. Verfahren oder System oder Zubehör (10) gemäß einem der vorhergehenden Ansprüche, wobei das zweirädrige motorisierte Fahrzeug (6) ein Elektrofahrrad ist.

## Revendications

1. Procédé de sécurité antivol pour un véhicule motorisé à deux roues (6) dans lequel le véhicule comprend :
- un moteur électrique (M) pour assister ou réaliser la propulsion du véhicule ;
- un accessoire (10) détachable du véhicule comprenant un circuit électronique (40) pour recevoir un signal de manière sans fil, et
- un processeur électronique (U1, U2) configuré pour commander le moteur lorsque l'accessoire (10) est monté sur le véhicule (6) ;
où
l'accessoire (10) émet un signal (S1) pour déverrouiller sans condition le fonctionnement du processeur électronique (U2) ou du moteur (M) uniquement si, par l'intermédiaire du circuit électronique (40), il reconnaît un signal sans fil provenant d'un dispositif électronique portable externe (70),
l'appareil électronique portable externe (70) étant un téléphone mobile, un smartphone ou une tablette.

2. Système de sécurité antivol comprenant
- un véhicule motorisé à deux roues (6) qui comprend
un moteur électrique (M) pour assister ou réaliser la propulsion du véhicule,
un accessoire (10) détachable du véhicule comprenant un circuit électronique (40) de réception de données sans fil,
un microprocesseur (U2) configuré pour contrôler le moteur (M) ;
- un appareil électronique portable externe (70), qui est un téléphone mobile, un smartphone ou une tablette,
dans lequel l'accessoire (10) est configuré pour émettre un signal (S1) pour déverrouiller de manière inconditionnelle le fonctionnement du moteur (M) ou du microprocesseur (U2) uniquement si, par l'intermédiaire du circuit électronique (40), il reconnaît un signal sans fil (82) provenant du dispositif électronique portable externe (70).

3. Accessoire (10) pour véhicule motorisé à deux roues (6),
le véhicule comprenant un moteur électrique (M) pour assister ou réaliser la propulsion du véhicule,
l'accessoire comprenant
- une partie formée pour une fixation amovible au véhicule, et
- un circuit électronique (40) pour recevoir un signal (S2) de manière sans fil,
dans lequel l'accessoire (10) est configuré pour émettre un signal (S1) pour déverrouiller de manière inconditionnelle le fonctionnement du moteur uniquement si, par l'intermédiaire du circuit électronique (40), il reconnaît un signal sans fil (S2) provenant du dispositif électronique portable externe (70), ce dernier étant un téléphone portable, un smartphone ou une tablette.

4. Procédé ou système ou accessoire (10) selon l'une quelconque des revendications précédentes, dans lequel l'accessoire (10) est configuré pour envoyer ledit signal (S1) uniquement lorsqu'il est monté sur le véhicule (6).

5. Procédé ou système ou accessoire (10) selon l'une quelconque des revendications précédentes, dans lequel l'accessoire (10) est configuré pour déverrouiller de manière inconditionnelle le fonctionnement du moteur (M) en envoyant un signal à un microprocesseur (U1) configuré pour commander le moteur (M), le microprocesseur étant embarqué sur l'accessoire ou le véhicule.

6. Procédé ou système ou accessoire (10) selon l'une quelconque des revendications précédentes, dans lequel l'accessoire (10) est configuré pour déverrouiller de manière inconditionnelle le fonctionnement du moteur (M) uniquement si, par l'intermédiaire du circuit électronique (40), il reconnaît un signal spécifique (S2) provenant d'un dispositif électronique portable externe (70).

7. Procédé ou système ou accessoire (10) selon l'une quelconque des revendications précédentes, dans lequel l'accessoire (10) est configuré pour déverrouiller de manière inconditionnelle le fonctionnement du moteur (M) uniquement si, par l'intermédiaire du circuit électronique (40), il reconnaît un signal (S2) provenant d'un dispositif électronique portable externe spécifique (70).

8. Procédé ou système ou accessoire (10) selon l'une quelconque des revendications précédentes, dans lequel l'accessoire (10) est configuré pour demander à l'utilisateur de saisir un code pour déverrouiller le fonctionnement du moteur si l'accessoire ne reconnaît pas ledit signal (S2), et si le code saisi est correct, l'accessoire est configuré pour déverrouiller le moteur (M).

9. Procédé ou système ou accessoire (10) selon l'une quelconque des revendications précédentes, dans lequel l'accessoire (10) comprend un écran (20) pour afficher des données ou des informations.

10. Procédé ou système ou accessoire (10) selon l'une quelconque des revendications précédentes, dans lequel le véhicule motorisé à deux roues (6) est un vélo électrique.
